Europäisches Patentamt

European Patent Office

Office européen des brevets

(19)

(11) Numéro de publication: **0 138 677**
**A2**

(12) **DEMANDE DE BREVET EUROPEEN**

(21) Numéro de dépôt: 84401885.3

(22) Date de dépôt: 21.09.84

(51) Int. Cl.⁴: **F 28 D 7/10,** F 28 F 1/42, F 28 F 21/00, F 02 C 7/08

(30) Priorité: 21.09.83 FR 8315017
21.09.83 FR 8315018

(43) Date de publication de la demande: 24.04.85
Bulletin 85/17

(84) Etats contractants désignés: **CH DE GB IT LI SE**

(71) Demandeur: **Office National d'Etudes et de Recherches Aerospatiales (O.N.E.R.A.), 29 Avenue de la Division Leclerc, F-92320 Châtillon-sous-Bagneux (FR)**

(72) Inventeur: **Boudigues, Serge, 38, avenue Franklin Roosevelt, F-92330 Sceaux (FR)**
Inventeur: **Pelissier, André, 6, rue Michel Ange, F-91940 Les Ulis (FR)**

(74) Mandataire: **Jacquelin, Marc-Henri et al, Cabinet PLASSERAUD 84, rue d'Amsterdam, F-75009 Paris (FR)**

(54) **Perfectionnements apportés aux tubes échangeurs de chaleur, aux échangeurs réalisés avec de tel tubes, et aux installations à turbines à gaz comportant de tels échangeurs.**

(57) Le tube échangeur comporte au moins trois cylindres concentriques ($1_a$, $1_b$, $1_c$) définissant des espaces annulaires ($2_a$, $2_b$) dans lesquels circulent respectivement les fluides entre lesquels doivent s'opérer les échanges thermiques, lesdits espaces annulaires comprenant une pluralité de nervures radiales (3) reliant entre eux les susdits cylindres ($1_a$, $1_b$, $1_c$). Les nervures radiales (3) sont disposées — dans les espaces annulaires ($2_a$, $2_b$) — dans le prolongement les unes des autres, elles sont thermiquement solidaires des parois des cylindres ($1_a$, $1_b$, $1_c$) qu'elles relient, et elles sont constituées en même matériau que le matériau constitutif desdits cylindres.

Perfectionnements apportés aux tubes échangeurs de chaleur, aux échangeurs réalisés avec de tels tubes, et aux installations à turbines à gaz comportant de tels échangeurs

---------------------------------------------------------------

L'invention est relative aux tubes échangeurs de chaleur, aux échangeurs réalisés avec de tels tubes, et aux installations à turbines à gaz comportant de tels échangeurs.

On connaît des tubes échangeurs de chaleur constitués par deux cylindres concentriques, les fluides entre lesquels doivent s'opérer les échanges thermiques circulant respectivement dans l'espace central et l'espace annulaire.

Cependant, les échanges thermiques que l'on peut espérer avec une telle disposition sont limités à la transmission de chaleur par conduction à travers le cylindre intérieur.

On connaît également des tubes échangeurs de chaleur constitués chacun par au moins trois cylindres concentriques définissant des espaces annulaires dans lesquels circulent respectivement les fluides entre lesquels doivent s'opérer les échanges thermiques, lesdits espaces annulaires comprenant une pluralité de nervures radiales reliant entre eux les susdits cylindres.

Cependant de tels tubes échangeurs sont relativement compliqués à réaliser, ils conduisent à des structures relativement lourdes, et l'amélioration de leur rendement reste faible.

La présente invention a pour but de rendre les tubes échangeurs de chaleur du type décrit ci-dessus plus compétitifs au point de vue de leur réalisation, de leur poids et de leur rendement.

A cet effet les nervures radiales ménagées dans les espaces annulaires définis par les cylindres concentriques présentent, en combinaison, les trois caractéristiques suivantes :

- elles sont disposées, dans les espaces annulaires, dans le prolongement les unes des autres,

- 2 -

- elles sont thermiquement solidaires des parois des cylindres qu'elles relient

- et elles sont constituées en même matériau que le matériau constitutif des cylindres qu'elles relient.

Grâce à ces trois caractéristiques, le tube échangeur est simple à réaliser (par exemple par extrusion); il présente un faible poids (par exemple en choisissant un matériau relativement léger); il procure une amélioration de rendement (par exemple par un choix dimensionnel des nervures qui permet des échanges de chaleur importants par conduction à travers les nervures).

A propos de ce dernier point il convient de préciser qu'on peut encore augmenter les échanges de chaleur par conduction à travers les nervures en donnant aux nervures radiales une forme telle que leur épaisseur est maximum au voisinage de la paroi du ou des cylindres intermédiaires à travers lesquels s'opèrent les échanges thermiques, et va en diminuant, vers les cylindres adjacents.

Au point de vue constructif, et dans le cas d'un tube échangeur à trois cylindres concentriques, l'espace annulaire interne s'étend, à ses deux extrémités, au-delà de l'espace annulaire externe, pour délimiter deux espaces d'extrémité par lesquels s'opèrent respectivement l'entrée et la sortie du fluide traversant ledit espace annulaire externe . Ces espaces d'extrémité sont également délimités par des flasques d'extrémité au nombre de quatre.

L'invention est également relative aux échangeurs réalisés avec de tels tubes et dans lesquels il est prévu une disposition concentrique de ces tubes, disposition avantageuse au point de vue encombrement.

L'invention est aussi relative aux installations à turbines à gaz comportant : au moins un compresseur; au moins une chambre de combustion; au moins une turbine haute pression entraînant le compresseur; au moins une turbine basse pression indépendante de la turbine haute pression et entraînant un organe récepteur; et des moyens d'échanges thermiques disposés entre la turbine haute pression et la turbine basse pression et traversés par, d'une part, une partie au moins des gaz de combustion issus de la turbine haute pression et, d'autre part, une partie au moins des gaz issus du compresseur ; lesquelles installations étant caractérisées par le fait que ces moyens d'échanges thermiques comprennent au moins un échangeur de chaleur réalisé avec les tubes échangeurs de chaleur présentant les caractéristiques ci-dessus.

L'invention pourra, de toute façon, être bien comprise à l'aide du complément de description qui suit, ainsi que des dessins ci-annexés, lesquels complément et dessins sont relatifs à un mode de réalisation préféré de l'invention et ne comportent, bien entendu, aucun caractère limitatif.

La figure 1, de ces dessins, montre, en coupe transversale, un tube échangeur établi conformément à l'invention.

La figure 2 est une coupe selon II-II, figure 1.

La figure 3 est une coupe longitudinale d'un tube échangeur conforme à l'invention monté dans un échangeur.

La figure 4 est une coupe transversale partielle d'un tube échangeur établi conformément à une disposition avantageuse de l'invention.

La figure 5 est une coupe montrant schématiquement un échangeur établi avec des tubes échangeurs conformes à l'invention.

La figure 6 est une coupe selon VI-VI fig. 5.

Les figures 7 et 8 sont deux vues schématiques d'une installation à turbines à gaz établie, conformément à l'invention, c'est-à-dire avec échangeurs de chaleur réalisés avec des tubes échangeurs de chaleur nervurés.

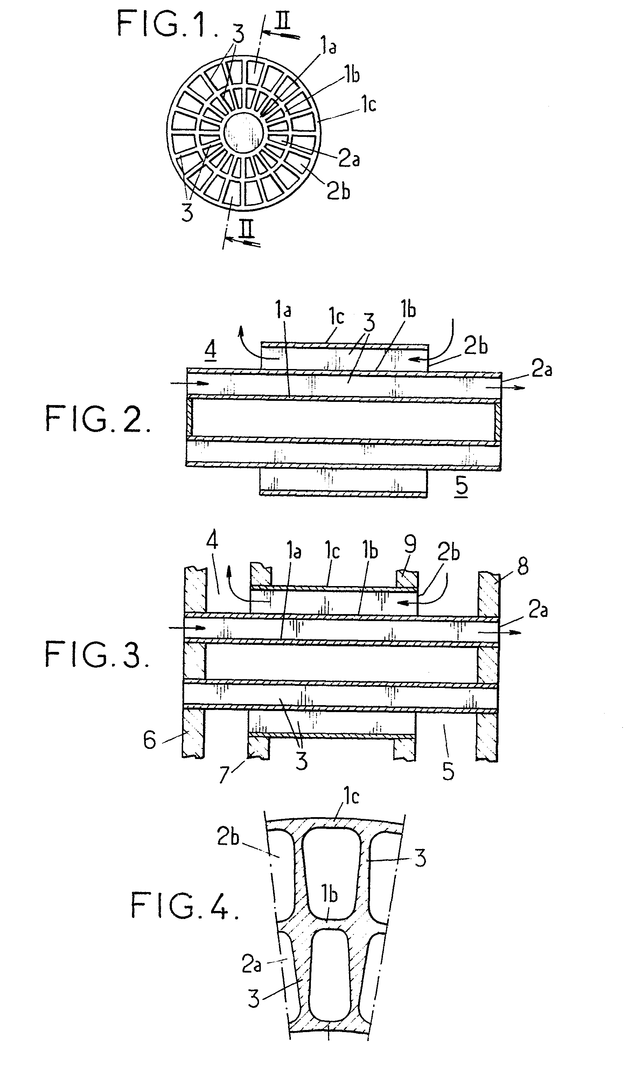

Sur les figures 1 et 2, on a montré un tube échangeur conforme à l'invention.

Ce tube échangeur est constitué par trois cylindres concentriques $1_a$, $1_b$, $1_c$, les fluides entre lesquels doivent s'opérer les échanges thermiques circulant respectivement dans les deux espaces annulaires interne $2_a$ et externe $2_b$.

- 4 -

Ces deux espaces annulaires interne $2_a$ et externe $2_b$ comportent des nervures radiales 3 reliant entre eux les cylindres, c'est-à-dire que les nervures radiales 3 de l'espace annulaire interne $2_a$ relient le cylindre intérieur $1_a$ au cylindre intermédiaire $1_b$, et que les nervures radiales 3 de l'espace annulaire externe $2_b$ relient le cylindre intermédiaire $1_b$ au cylindre extérieur $1_c$.

Ces nervures radiales 3,

- sont disposées, dans les espaces annulaires interne $2_a$ et externe $2_b$, dans le prolongement les unes des autres,

- sont thermiquement solidaires des parois des cylindres $1_a$, $1_b$, $1_c$ qu'elles relient,

- et sont constituées en même matériau que le matériau constitutif des cylindres $1_a$, $1_b$, $1_c$ qu'elles relient.

Les échanges de chaleur, par conduction à travers la paroi du cylindre intermédiaire $1_b$, se trouvent donc augmentés dans des proportions importantes par les échanges de chaleur par conduction à travers les nervures 3. A titre d'exemple, on peut citer que l'on peut obtenir des tubes dans lesquels 80% de la chaleur est transmise par conduction dans les nervures et 20% de la chaleur est transmise par conduction au travers des parois du cylindre intermédiaire.

Comme montré sur la figure 4, la forme des nervures 3 est telle que leur épaisseur est maximum au voisinage de la paroi du cylindre intermédiaire $1_b$ (à travers lequel s'opèrent les échanges thermiques) et va en diminuant vers le cylindre intérieur $1_a$, pour les nervures 3 de l'espace annulaire interne $2_a$, et vers le cylindre extérieur $1_c$, pour les nervures 3 de l'espace annulaire externe $2_b$.

Grâce à cette disposition, un gain de masse peut être obtenu, à efficacité d'échange thermique égale.

Comme montré sur la figure 2, l'espace annulaire interne $2_a$ s'étend, à ses deux extrémités, au-delà de l'espace annulaire externe $2_b$, pour délimiter deux espaces

— 5 —

d'extrémité 4 et 5 par lesquels s'opèrent respectivement l'entrée et la sortie du fluide traversant ledit espace annulaire externe $2_b$.

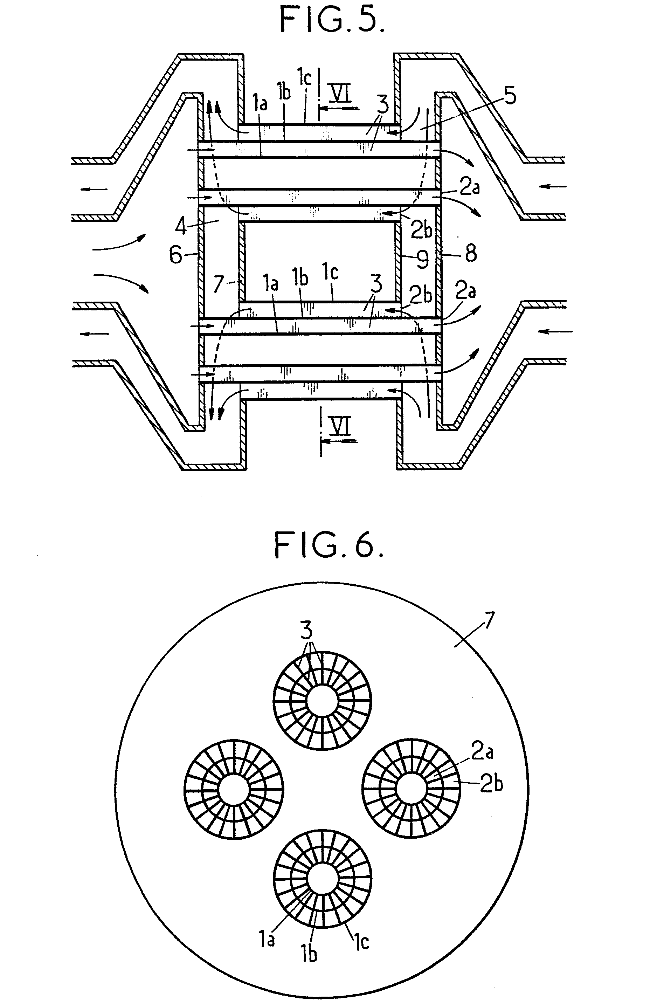

Ces espaces d'extrémité 4 et 5 sont également délimités par des flasques d'extrémité 6, 7 et 8,9 lors du montage des tubes échangeurs dans un échangeur (figures 3 et 5).

La disposition des tubes échangeurs dans l'échangeur est avantageusement une disposition concentrique suivant une ou plusieurs circonférences (fig.6). Dans ce dernier cas, les flasques 6, 7 et 8,9 délimitent des espaces 4 et 5 à section évolutive pour assurer une alimentation uniforme de tous les tubes échangeurs.

Les tubes échangeurs conformes à l'invention peuvent être réalisés en des matériaux conducteurs de la chaleur puisque les échanges thermiques font appel à la conduction.

En particulier, si la température est inférieure à 300°C, on peut réaliser les tubes échangeurs en alliage de magnésium, d'aluminium, ou de cuivre.

Si la température est inférieure à 800°C, on peut réaliser les tubes échangeurs en alliage de fer.

Si la température est inférieure à 1.500°C, on peut réaliser les tubes échangeurs en céramique, notamment en carbure ou en nitrure de silicium; il est à noter, du fait de sa faible masse volumique (environ 3), que le carbure de silicium est particulièrement avantageux d'autant plus qu'il présente un très bon coefficient de conductivité thermique.

Les échangeurs constitués avec des tubes échangeurs conformes à l'invention rencontrent une application particulièrement avantageuse dans la récupération des calories à haute température, et ce grâce à la possibilité de réaliser les tubes échangeurs en carbure de silicium ou en nitrure de silicium.

Constructivement, ces deux matériaux permettent de réaliser des épaisseurs très faibles (de l'ordre de 0,2 mm) pour les nervures et les parois cylindriques, ce qui conduit à la réalisation d'échangeurs légers.

- 6 -

Au point de vue fabrication il est particulièrement simple d'avoir recours à des procédés de fabrication par extrusion, ce qui est particulièrement avantageux dans le cas de tubes échangeurs constitués en céramique.

De tels échangeurs peuvent donc être montés dans des installations à turbines à gaz, en particulier aéronautiques, pour réchauffer l'air issu du compresseur avant son admission dans les chambres de combustion.

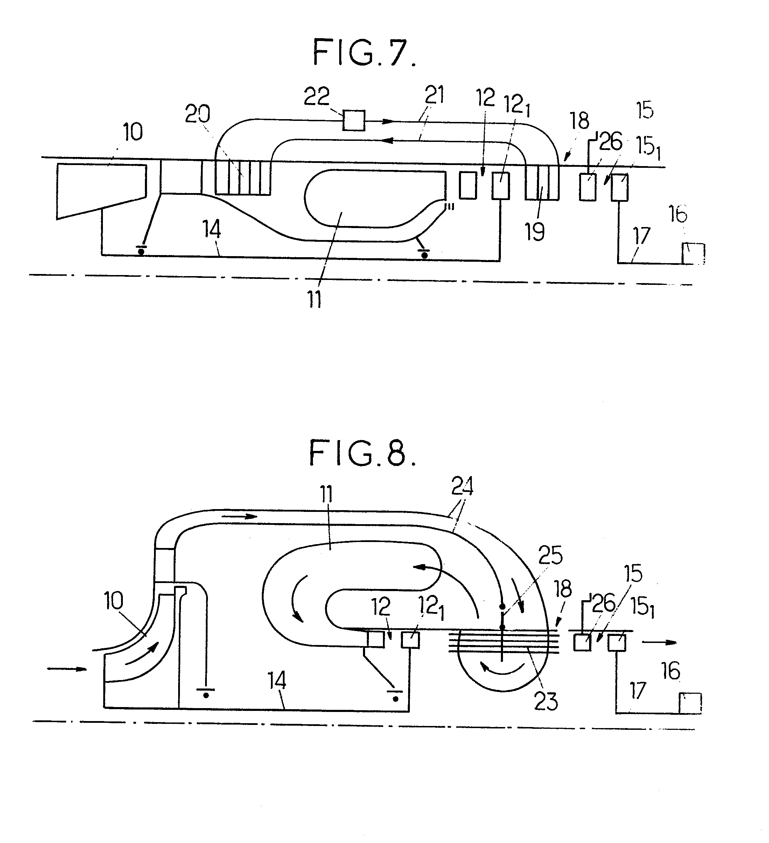

Comme montré sur les figures 7 et 8, l'installation à turbines à gaz comporte un compresseur 10, une chambre de combustion 11, une turbine haute pression 12 comportant une roue $12_1$ entraînant le compresseur 10 par l'intermédiaire d'un arbre 14, une turbine basse pression 15 indépendante de la turbine haute pression 12 comportant un distributeur réglable 26 et une roue $15_1$ et entraînant un organe récepteur 16 qui peut être une soufflante de double flux ou le corps basse pression d'un monoflux, par l'intermédiaire d'un arbre 17.

Pour réchauffer tout ou partie de l'air issu du compresseur 10 avant son admission dans la chambre de combustion 11, il est prévu des moyens d'échanges thermiques 18 disposés entre la turbine haute pression 12 et la turbine basse pression 15. Ces moyens d'échanges thermiques 18 sont traversés par tout ou partie des gaz de combustion issus de la turbine haute pression.

Selon le mode de réalisation illustré sur la figure 7, ces moyens d'échanges thermiques 18 comportent,

- un échangeur de chaleur 19 disposé entre la turbine haute pression 12 et la turbine basse pression 15 et parcouru par au moins une partie des gaz de combustion issus de la turbine haute pression 12;

- un échangeur de chaleur 20 disposé entre le compresseur 10 et la chambre de combustion 11 et parcouru par au moins une partie de l'air issu du compresseur 10,

- et un circuit de fluide caloporteur 21, éventuellement muni de moyens de réglage 22, reliant les deux susdits échangeurs 20 et 19.

- 7 -

Selon le mode de réalisation illustré sur la figure 8, ces moyens d'échanges thermiques 8 comportent :

- un échangeur de chaleur 23 disposé entre la turbine haute pression 12 et la turbine basse pression 15 et parcouru par au moins une partie des gaz de combustion issus de la turbine haute pression 12;

- et un circuit 24 par lequel au moins une partie de l'air issu du compresseur 10, partie éventuellement réglable par des moyens de réglage 25, est dirigé vers le susdit échangeur 23 avant d'être admis dans la chambre de combustion 11.

Les moyens d'échanges thermiques 18, et notamment l'échangeur de chaleur 19 ou 23 disposé entre la turbine haute pression 12 et la turbine basse pression 15, sont réalisés avec des tubes échangeurs de chaleur présentant les caractéristiques ci-dessus, tant dans leur structure (tubes échangeurs à nervures radiales) que dans leur constitution (tubes échangeurs en céramique).

Une telle installation à turbines à gaz (équipées de moyens d'échanges thermiques constitués par au moins un échangeur à tubes nervurés en céramique) trouve avantageusement de nombreuses applications dans le domaine aéronautique pour la construction de turbo-réacteurs à double flux (la turbine basse pression entraînant la soufflante) ou de turbo-propulseurs (la turbine basse pression entraînant l'hélice) ; le caractère avantageux de ces applications ressort du fait que l'échangeur à tubes nervurés en céramique est particulièrement simple à réaliser, qu'il présente un faible poids et qu'il assure un rendement élevé dans la transmission de chaleur .

- 8 -

REVENDICATIONS

1.- Tube échangeur de chaleur, comportant au moins trois cylindres concentriques ($1_a$, $1_b$, $1_c$) définissant des espaces annulaires ($2_a$, $2_b$) dans lesquels circulent respectivement les fluides entre lesquels doivent s'opérer les échanges thermiques, lesdits espaces annulaires comprenant une pluralité de nervures radiales (3) reliant entre eux les susdits cylindres ($1_a$, $1_b$, $1_c$), caractérisé par le fait que ces nervures radiales (3) sont disposées, dans les espaces annulaires ($2_a$, $2_b$), dans le prolongement les unes des autres, par le fait que ces nervures radiales (3) sont thermiquement solidaires des parois des cylindres ($1_a$, $1_b$, $1_c$) qu'elles relient, et par le fait que ces nervures radiales (3) sont constituées en même matériau que le matériau constitutif des cylindres ($1_a$, $1_b$, $1_c$) qu'elles relient.

2.- Tube échangeur de chaleur selon la revendication 1, caractérisé par le fait que la forme des nervures radiales (3) est telle que leur épaisseur est maximum au voisinage de la paroi du ou des cylindres intermédiaires ($1_b$) à travers lesquels s'opèrent les échanges thermiques, et va en diminuant vers les cylindres adjacents ($1_a$, $1_c$).

3.- Tube échangeur de chaleur selon la revendication 1 ou 2, comportant trois cylindres concentriques ($1_a$, $1_b$, $1_c$), caractérisé par le fait que l'espace annulaire interne ($2_a$) s'étend, à ses deux extrémités, au-delà de l'espace annulaire externe ($2_b$), pour délimiter deux espaces d'extrémité (4 et 5) par lesquels s'opèrent respectivement l'entrée et la sortie du fluide traversant ledit espace annulaire externe ($2_b$).

4.- Tube échangeur de chaleur selon l'une quelconque des revendications 1 à 3, caractérisé par le fait qu'il est réalisé en alliage de magnésium, d'aluminium ou de cuivre.

5.- Tube échangeur de chaleur selon l'une quelconque des revendications 1 à 3, caractérisé par le fait qu'il est réalisé en alliage de fer.

6.- Tube échangeur de chaleur selon l'une quelconque des revendications 1 à 3, caractérisé par le fait qu'il est réalisé en céramique.

7.- Tube échangeur de chaleur selon la revendication 6, caractérisé par le fait qu'il est réalisé en carbure ou en nitrure de silicium.

8.- Echangeur de chaleur, caractérisé par le fait qu'il comporte une pluralité de tubes échangeurs selon l'une quelconque des revendications 1 à 7.

9.- Echangeur de chaleur selon la revendication 8, caractérisé par le fait que les tubes échangeurs sont disposés suivant une ou plusieurs circonférences.

10.- Installation à turbines à gaz comportant : au moins un compresseur (10) ; au moins une chambre de combustion (11) ; au moins une turbine haute pression (12) entraînant le compresseur (10) ; au moins une turbine basse pression (15) indépendante de la turbine haute pression (12) et entraînant un organe récepteur (16) ; des moyens d'échanges thermiques (18) disposés entre la turbine haute pression (12) et la turbine basse pression (15) et traversés par, d'une part, une partie au moins des gaz de combustion issus de la turbine haute pression (12) et, d'autre part, une partie au moins de l'air issu du compresseur (10), caractérisée par le fait que ces moyens d'échanges thermiques (18) comprennent au moins un échangeur de chaleur (19,23) réalisé par des tubes échangeurs selon l'une quelconque des revendications 1 à 7.

0138677

FIG.1.

1|3

FIG.2.

FIG.3.

FIG.4.

# FIG.5.

# FIG.6.

# FIG.7.

# FIG.8.